# EUROPEAN PATENT SPECIFICATION

(11) **EP 4 111 600 B1**
(45) Date of publication and mention of the grant of the patent: **02.12.2026**
(21) Application number: 21709117.2
(22) Date of filing: 22.02.2021
(51) Int. Cl.: H04B 7/0456, H04B 7/06, H04B 17/12

(54) **TIMING ERROR ESTIMATION/COMPENSATION FOR 5G NR DOWNLINK SYSTEMS WITH UNCALIBRATED ANTENNAS**
SCHÄTZUNG/KOMPENSATION VON ZEITVERSATZFEHLERN FÜR 5G SYSTEME IN ABWÄRTSRICHTUNG MIT UNKALIBRIERTEN ANTENNEN
ESTIMATION ET COMPENSATION D'ERREUR DE DÉLAI DESTINÉE À DES SYSTÈMES DE LIASONS DESCENDANTES 5G AVEC DES ANTENNES NON ÉTALONNÉES

(30) Priority: 26.02.2020 US 202062981724 P
(43) Date of publication of application: 04.01.2023
(73) Proprietor: Telefonaktiebolaget LM Ericsson (publ), 164 83 Stockholm (SE)
(72) Inventor: LONG, Jianguo, Ottawa, Ontario K1T 0T5 (CA); LI, Shaohua, Kanata, Ontario K2T 0H5 (CA); QIANG, Yongquan, Ottawa, Ontario K2W 1H6 (CA)
(74) Representative: Murgitroyd & Company
(86) International application number: PCT/IB2021/051490
(87) International publication number: WO 2021/171167

(56) References cited:
- US-A1- 2013 064 277
- NOKIA SIEMENS NETWORKS ET AL: "Discussion of Time Misalignment and Antenna Array Calibration", 3GPP DRAFT; R1-113153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 5 October 2011 (2011-10-05), XP050538507
- ALCATEL-LUCENT SHANGHAI BELL ET AL: "On handling of timing misalignment and antenna calibration", 3GPP DRAFT; R1-113333 HANDLING OF TIMING MISALIGNMENT AND ANTENNA CALIBRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 6 October 2011 (2011-10-06), XP050538596

## Description

### TECHNICAL FIELD

The present disclosure relates to wireless communication and in particular, to timing error estimation and compensation for Fifth Generation (5G) New Radio (NR) downlink (DL) systems with uncalibrated antennas.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs.

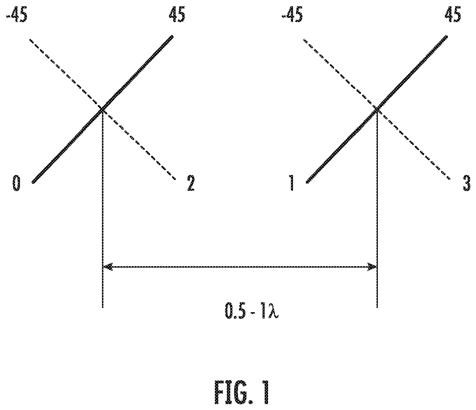

FIG. 1 shows 4 correlated downlink transmit antennas. This is one of the most commonly used 4-antenna set ups for LTE base stations (eNBs) and will likely also be used in NR low band systems. The four antennas are cross-polarized, i.e., the antennas are either placed with a slant angle 45° (polarization A) or -45° (polarization B). Two cross-polarized antenna pairs are closely spaced with 0.5 to 1λ separation. The advantage of such a configuration is that it provides excellent beamforming gain because the co-polarized antennas (antenna pair 0 and 1 or antenna pair 2 and 3) are correlated. The configuration also allows reasonable multiplexing gain of up to 4 layers because of a combination of polarization diversity and sufficient spatial diversity.

Beamforming with correlated antennas requires that the phase difference between individual antenna elements is small. Any antenna error that affects phase relations could prevent systems from realizing full beamforming potential. Ideally, to achieve beamforming gain, the antennas showed in FIG. 1 should be calibrated. However, due to cost, the 4 transmit antennas of FIG. 1 used in the LTE base station (eNB) are uncalibrated. As the wireless industry evolves into 5G, those radio-antenna systems will be reused. When antennas are uncalibrated, the signal over each antenna will have different phase Øₖ, k=0,1,2,3.

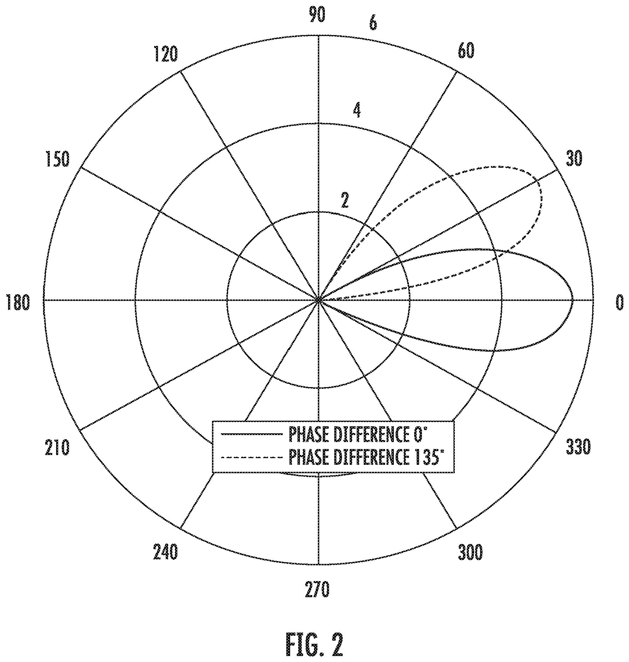

For each pair of correlated co-polarized antennas, i.e., antenna pair 0 and 1 for polarization A or antenna pair 2 and 3 for polarization B, the main lobe of the radiation pattern of the antenna pair points in the direction where the phases of antenna signals are added constructively. Hence, beam direction depends on the phase difference between two co-polarized antennas. When the phase difference between two correlated antennas changes, the beam direction will change as illustrated by FIG. 2.

The phase difference between antennas in each co-polarized antenna pair can be expressed approximately as: ${∅}_{A} = {∅}_{1} - {∅}_{0}$ and ${∅}_{B} = {∅}_{3} - {∅}_{2}$

If the antennas are calibrated, i.e., Øₖ=0 for all k=0,1,2,3, Ø_{A}=Ø_{B}=0 and the beams from two polarizations are aligned and point to bore sight, as illustrated by the solid line in FIG. 2.

If the antennas are not calibrated, i.e., Øₖ≠0 for all k=0,1,2,3, but the phase differences of two polarizations are the same, i.e., Ø_{A}=Ø_{B}≠0, the beams from two polarizations are still aligned while beam direction will be deviated from bore sight. For example, when Ø_{A}=Ø_{B}=135°, the beams of two polarizations can be illustrated by the dashed line in FIG. 2.

However, when the phase difference from two beams is not equal, i.e., Ø_{A}≠Ø_{B}, two beams will point to different directions. The example shown in FIG. 1 can be considered such as a case when Ø_{A}=0° and Ø_{B}=135°. In this case, if the phase error is not corrected, there will be power loss when the network node (radio base station) sends signals to the WD.

The phase error of each antenna Øₖ, k=0,1,2,3, has two components, a frequency independent static phase φₖ and a frequency dependent phase caused by timing delay Δtₖ, i.e., ${∅}_{k} = - 2 {πfΔt}_{k} + {φ}_{k} , k = 0 , 1 , 2,3$ The static phase error φₖ can be compensated. Hence, assume φₖ=0, k=0,1,2,3. And the phase error is given by ${∅}_{k} = - 2 {πfΔt}_{k} , k = 0 , 1 , 2,3$

The phase difference between antennas in each co-polarized antenna pair becomes: ${∅}_{A} = {∅}_{1} - {∅}_{0} = - 2 πf \left({Δt}_{1}-{Δt}_{0}\right)$ and ${∅}_{B} = {∅}_{3} - {∅}_{2} = - 2 πf \left({Δt}_{3}-{Δt}_{2}\right) .$

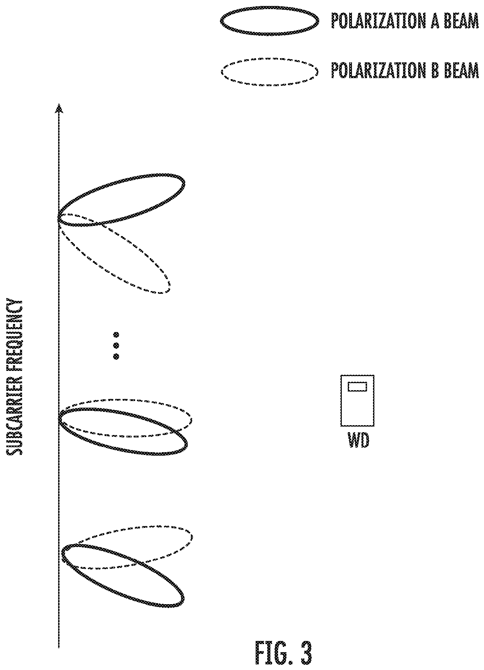

As Ø_{A} and Ø_{B} are frequency dependent, there are two consequences as illustrated in FIG. 3. First, the phase error will result in an effect called beam squint, i.e., the beam of a specific polarization will point to different directions at different subcarrier frequencies when the timing delays of co-polarized antennas are different. Second, the beams of two polarizations will not be aligned if Δt₁-Δt₀ ≠ Δt₃-Δt₂.

These two issues cannot be corrected with a 5G NR downlink type I codebook. First, the beam direction component of the precoder matrix indicator (PMI) report is defined as wideband. When the beam of a polarization points to different directions at different subbands, the network node cannot perform per subband phase compensation. Instead, a compromised wideband phase compensation is used which may result in performance degradation. Second, the 5G NR type 1 codebook assumes that the beams of two polarization point to the same direction. The 5G NR type 1 codebook is not capable of compensating the phase error of each polarization separately to align the beams. Hence, for systems with four correlated and uncalibrated antennas, the NR type I codebook will have poor performance due to beam misalignment caused by antenna timing error.

The 5G NR type I codebook assumes beams from two polarizations always point to the same direction over whole cell bandwidth. However, this is not the case for systems with uncalibrated antennas, as timing error of antennas can cause frequency dependent beam misalignment. Performance will be poor when applying the NR type I codebook to systems with uncalibrated antennas.

Document "Discussion of Time Misalignment and Antenna Array Calibration", Nokia Siemens Networks et al., 3GPP draft R1-113153 may be construed to disclose an evaluation of calibration errors and time misalignment pertaining to antenna array calibration. The following proposals were made. Proposal: For transmission types where calibration is technically feasible, both antenna array calibration and inter-branch time misalignment should be handled as infrastructure specific implementation issues with no standardization changes. Proposal: Enhanced feedback modes should be evaluated and considered primarily for their ability to provide gains over existing feedback modes, not solely for their ability to solve the problem of calibration errors and timing misalignment. Proposal: For transmission types where calibration is not technically feasible, such as when non-co-located antennas are used to serve a single UE, the performance impact of timing misalignment and calibration errors require further study and should be included when reporting performance numbers.

Document "On handling of timing misalignment and antenna calibration", Alcatel-Lucent Shanghai Bell et al., 3GPP draft R1-113333 may be construed to disclose an evaluation of CQI-based antenna calibration for TDD CoMP.

### SUMMARY

According to the present disclosure, there are provided a method, a computer-readable medium and a network node according to the independent claims. Further developments are set forth in the dependent claims.

Some embodiments advantageously provide a method and system for timing error estimation and compensation for Fifth Generation (5G) New Radio (NR) downlink (DL) systems with uncalibrated antennas.

Some embodiments provide estimation and compensation of antenna timing error in 5G NR downlink systems with correlated and uncalibrated antennas. These methods and systems estimate and compensate antenna timing errors of 5G NR downlink systems with uncalibrated antennas. Some embodiments may include systems and mechanisms to inject timing offsets to a set of transmitted CSI-RS signals; methods to detect the timing error of antennas by configuring WD to report CRI in CSI report for the timing offset injected; and methods to apply timing compensation to downlink signals.

According to one aspect, a method in a network node for timing compensation of a co-polarized antenna pair is provided. The method includes transmitting a first Channel State Information Reference Signal, CSI-RS, having a first timing compensation, wherein a first CSI-RS resource indicated by the first CSI-RS has two ports, and transmitting a second CSI-RS having a second timing compensation, wherein a second CSI-RS resource indicated by the second CSI-RS has two ports and wherein a first and a second of the two ports of each of the first and second CSI-RS resources is mapped to a first and a second antenna, respectively, of the co-polarized antenna pair. The method also includes receiving a CSI-RS resource indicator, CRI, in a CSI report from a wireless device, WD. The method further includes determining from the CRI which of the first and second timing compensation results in a greater spectrum efficiency.

According to this aspect, in some embodiments, the method preferably further includes iteratively performing the transmitting, receiving and determining until a timing compensation that results in a maximum spectrum efficiency at the WD is determined, wherein a set of first and second timing compensations for a respective next iteration is determined based on which one of the first and second timing compensation of a respective current iteration resulted in a greater spectrum efficiency. In some embodiments, the timing compensation that results in the maximum spectrum efficiency is preferably determined according to a linear search algorithm. In some embodiments, the timing compensation that results in the maximum spectrum efficiency is preferably determined according to a non-linear search algorithm. In some embodiments, the timing compensation that results in a maximum spectrum efficiency is determined periodically. In some embodiments, determining a timing compensation that results in a maximum spectrum efficiency is preferably performed for a first polarization of a set of co-polarized antenna pairs, followed by determining a timing compensation that results in a maximum spectrum efficiency for a second polarization of the set of co-polarized antenna pairs. In some embodiments, for each polarization, one antenna is preferably used as a reference antenna and a timing compensation is determined for each antenna of a polarization relative to the reference antenna. In some embodiments, the first and second timing compensation preferably are incremental after a first iteration. In some embodiments, the method preferably further includes transmitting an information element restricting a time for which the WD makes a measurement of a channel between the network node and the WD to prevent the WD from measuring the channel across multiple sequentially transmitted CSI-RS. In some embodiments, the method preferably further includes configuring the WD to make a channel measurement for reporting in an uplink timeslot based on a most recent occasion of a CSI-RS received by the WD.

According to another aspect, a network node is configured for timing compensation of a co-polarized antenna pair. The network node includes a radio interface configured to: transmit a first Channel State Information Reference Signal, CSI-RS, having a first timing compensation, wherein a first CSI-RS resource indicated by the first CSI-RS has two ports, and transmitting a second CSI-RS having a second timing compensation, wherein a second CSI-RS resource indicated by the second CSI-RS has two ports and wherein a first and a second of the two ports of each of the first and second CSI-RS resources is mapped to a first and a second antenna, respectively, of the co-polarized antenna pair; and receive a CSI-RS resource indicator, CRI, in a CSI report from a wireless device, WD. The network node also includes processing circuitry in communication with the radio interface. The processing circuitry is configured to determine from the CRI which of the first and second timing compensation results in a greater spectrum efficiency.

According to this aspect, in some embodiments, the processing circuitry and the radio interface are preferably configured to iteratively perform the transmitting, receiving and determining until a timing compensation that results in a maximum spectrum efficiency at the WD is determined, wherein a set of first and second timing compensations for a respective next iteration is determined based on which one of the first and second timing compensation of a respective current iteration resulted in a greater spectrum efficiency. In some embodiments, the timing compensation that results in the maximum spectrum efficiency is preferably determined according to a linear search algorithm. In some embodiments, the timing compensation that results in the maximum spectrum efficiency is preferably determined according to a non-linear search algorithm. In some embodiments, the timing compensation that results in a maximum spectrum efficiency is determined periodically. In some embodiments, the network node preferably further includes a set of co-polarized antenna pairs in communication with the radio interface, and wherein determining a timing compensation that results in a maximum spectrum efficiency is performed for a first polarization of the set of co-polarized antenna pairs, followed by determining a timing compensation that results in a maximum spectrum efficiency for a second polarization of the set of co-polarized antenna pairs. In some embodiments, one antenna is preferably used as a reference antenna and a timing compensation is preferably determined for each antenna of a polarization relative to the reference antenna. In some embodiments, the first and second timing compensation preferably are incremental after a first iteration. In some embodiments, wherein the processing circuitry and the radio interface preferably are configured to transmit an information element restricting a time for which the WD makes a measurement of a channel between the network node and the WD to prevent the WD from measuring the channel across multiple sequentially transmitted CSI-RS. In some embodiments, the network node is preferably further configured to configure the WD to make a channel measurement for reporting in an uplink timeslot based on a most recent occasion of a CSI-RS received by the WD.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is an illustration of 4 correlated downlink transmit antenna;
FIG. 2 is an illustration of beam tilt due to phase error;
FIG. 3 is another illustration of beam tilt;
FIG. 4 is a schematic diagram of an example network architecture illustrating a communication system according to principles disclosed herein;
FIG. 5 is a block diagram of a network node in communication with a wireless device over a wireless connection according to some embodiments of the present disclosure;
FIG. 6 is a flowchart of an example process in a network node for timing error estimation and compensation for Fifth Generation (5G) New Radio (NR) downlink (DL) systems with uncalibrated antennas;
FIG. 7 illustrates the frequency dependent beam direction caused by zero, small and large timing errors;
FIG. 8 is a graph of normalized throughput as a function of timing error;
FIG. 9 illustrates port mapping for a first polarization;
FIG. 10 illustrates successive timing compensation according to principles disclosed herein;
FIG. 11 is a flowchart of an example linear search algorithm to find a timing compensation to improve spectrum efficiency according to principles disclosed herein;
FIG. 12 is a flowchart of an example of a Golden-Section search algorithm to find a timing compensation to improve spectrum efficiency according to principles disclosed herein;
FIG. 13 illustrates a timing error and compensation process according to principles set forth herein;
FIG. 14 illustrates a two-dimensional antenna array; and
FIG. 15 illustrates successively performing timing calibration of the antennas of a two-dimensional array for a first polarization.

### DETAILED DESCRIPTION

Before describing in detail example embodiments, it is noted that the embodiments reside primarily in combinations of apparatus components and processing steps related to timing error estimation and compensation for Fifth Generation (5G) New Radio (NR) downlink (DL) systems with uncalibrated antennas. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled,""connected," and the like, may be used herein to indicate a connection, although not necessarily directly, and may include wired and/or wireless connections.

The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises,""comprising,''''includes'' and/or "including" when used herein, specify the presence of stated features, integers, steps, operations, elements, and/or components, but do not preclude the presence or addition of one or more other features, integers, steps, operations, elements, components, and/or groups thereof.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments are directed to timing error estimation and compensation for Fifth Generation (5G) New Radio (NR) downlink (DL) systems with uncalibrated antennas. According to one aspect, a method in a network node includes transmitting a first Channel State Information Reference Signal (CSI-RS) having a first timing compensation and transmitting a second CSI-RS having a second timing compensation, receiving a CSI-RS resource indicator (CRI) in a CSI report from a wireless device (WD), and determining from the CRI which of the first and second timing compensation results in a greater spectrum efficiency.

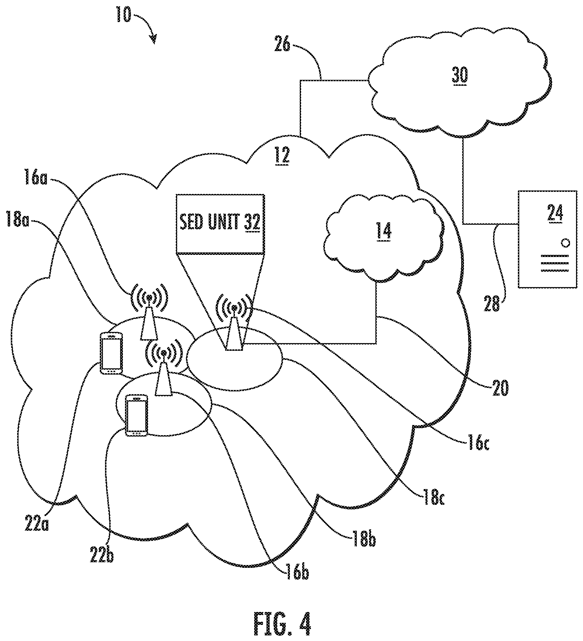

Referring again to the drawing figures, in which like elements are referred to by like reference numerals, there is shown in FIG. 4 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

A network node 16 (eNB or gNB) is configured to include a spectrum efficiency determination unit 32 which is configured to determine from the CRI which of the first and second timing compensation results in a greater spectrum efficiency.

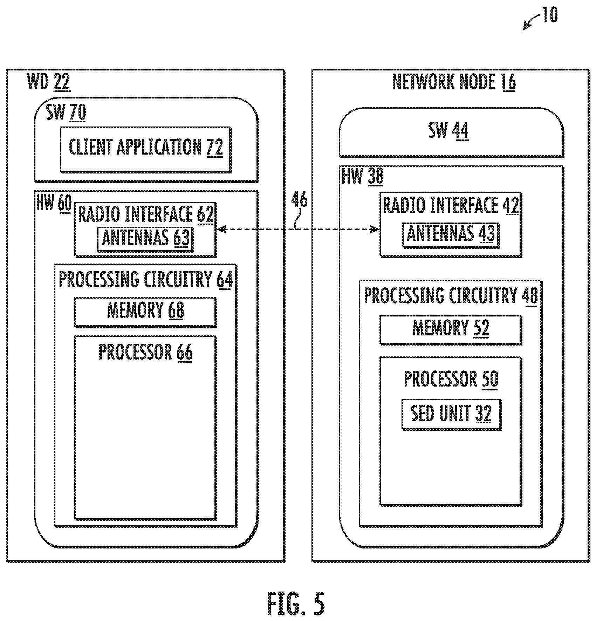

Example implementations, in accordance with an embodiment, of the WD 22, network node 16 and host computer 24 discussed in the preceding paragraphs will now be described with reference to FIG. 5.

The communication system 10 includes a network node 16 provided in a communication system 10 and including hardware 38 enabling it to communicate with the WD 22. The hardware 38 may include a radio interface 42 for setting up and maintaining at least a wireless connection 46 with a WD 22 located in a coverage area 18 served by the network node 16. The radio interface 42 may be formed as or may include, for example, one or more RF transmitters, one or more RF receivers, and/or one or more RF transceivers. The radio interface 42 includes an array of antennas 43 to radiate and receive signal carrying electromagnetic waves.

In the embodiment shown, the hardware 38 of the network node 16 further includes processing circuitry 48. The processing circuitry 48 may include a processor 50 and a memory 52. In particular, in addition to or instead of a processor, such as a central processing unit, and memory, the processing circuitry 48 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 50 may be configured to access (e.g., write to and/or read from) the memory 52, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 44 stored internally in, for example, memory 52, or stored in external memory (e.g., database, storage array, network storage device, etc.) accessible by the network node 16 via an external connection. The software 44 may be executable by the processing circuitry 48. The processing circuitry 48 may be configured to control any of the methods and/or processes described herein and/or to cause such methods, and/or processes to be performed, e.g., by network node 16. Processor 50 corresponds to one or more processors 50 for performing network node 16 functions described herein. The memory 52 is configured to store data, programmatic software code and/or other information described herein. In some embodiments, the software 44 may include instructions that, when executed by the processor 50 and/or processing circuitry 48, causes the processor 50 and/or processing circuitry 48 to perform the processes described herein with respect to network node 16. For example, processing circuitry 48 of the network node 16 may include spectrum efficiency determination unit 32 which is configured to determine from the CRI which of the first and second timing compensation results in a greater spectrum efficiency.

The communication system 10 further includes the WD 22 already referred to. The WD 22 may have hardware 60 that may include a radio interface 62 configured to set up and maintain a wireless connection 46 with a network node 16 serving a coverage area 18 in which the WD 22 is currently located. The radio interface 62 may be formed as or may include, for example, one or more RF transmitters, one or more RF receivers, and/or one or more RF transceivers. The radio interface 62 includes an array of antennas 63 to radiate and receive signal carrying electromagnetic waves.

The hardware 60 of the WD 22 further includes processing circuitry 64. The processing circuitry 64 may include a processor 66 and memory 68. In particular, in addition to or instead of a processor, such as a central processing unit, and memory, the processing circuitry 64 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 66 may be configured to access (e.g., write to and/or read from) memory 68, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 70, which is stored in, for example, memory 68 at the WD 22, or stored in external memory (e.g., database, storage array, network storage device, etc.) accessible by the WD 22. The software 70 may be executable by the processing circuitry 64. The software 70 may include a client application 72. The client application 72 may be operable to provide a service to a human or non-human user via the WD 22.

The processing circuitry 64 may be configured to control any of the methods and/or processes described herein and/or to cause such methods, and/or processes to be performed, e.g., by WD 22. The processor 66 corresponds to one or more processors 66 for performing WD 22 functions described herein. The WD 22 includes memory 68 that is configured to store data, programmatic software code and/or other information described herein. In some embodiments, the software 70 and/or the client application 72 may include instructions that, when executed by the processor 66 and/or processing circuitry 64, causes the processor 66 and/or processing circuitry 64 to perform the processes described herein with respect to WD 22.

In some embodiments, the inner workings of the network node 16 and WD 22 may be as shown in FIG. 5 and independently, the surrounding network topology may be that of FIG. 4.

The wireless connection 46 between the WD 22 and the network node 16 is in accordance with the teachings of the embodiments described throughout this disclosure. More precisely, the teachings of some of these embodiments may improve the data rate, latency, and/or power consumption and thereby provide benefits such as reduced user waiting time, relaxed restriction on file size, better responsiveness, extended battery lifetime, etc. In some embodiments, a measurement procedure may be provided for the purpose of monitoring data rate, latency and other factors on which the one or more embodiments improve.

Although FIGS. 4 and 5 show various "units" such as spectrum efficiency determination unit 32 as being within a respective processor, it is contemplated that these units may be implemented such that a portion of the unit is stored in a corresponding memory within the processing circuitry. In other words, the units may be implemented in hardware or in a combination of hardware and software within the processing circuitry.

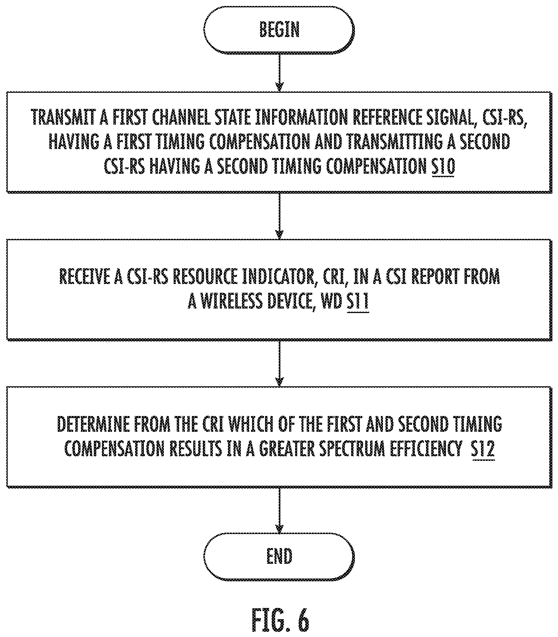

FIG. 6 is a flowchart of an example process in a network node 16 for timing error estimation and compensation for Fifth Generation (5G) New Radio (NR) downlink (DL) systems with uncalibrated antennas. One or more blocks described herein may be performed by one or more elements of network node 16 such as by one or more of processing circuitry 48 (including the spectrum efficiency determination unit 32), processor 50, and/or radio interface 42. Network node 16 such as via processing circuitry 48 and/or processor 50 and/or radio interface 42 is configured to transmit a first Channel State Information Reference Signal, CSI-RS, having a first timing compensation and transmitting a second CSI-RS having a second timing compensation (Block S10). The process also includes receiving a CSI-RS resource indicator, CRI, in a CSI report from a WD (Block S11). The process further includes determining from the CRI which of the first and second timing compensation results in a greater spectrum efficiency (Block S12).

Having described the general process flow of arrangements of the disclosure and having provided examples of hardware and software arrangements for implementing the processes and functions of the disclosure, the sections below provide details and examples of arrangements for timing error estimation and compensation for Fifth Generation (5G) New Radio (NR) downlink (DL) systems with uncalibrated antennas.

The NR type 1 codebook specified in the 3GPP NR standard is based on a set of pre-defined precoding matrices. The precoding matrix, denoted as *W,* can be described as a two-stage precoding structure as follows: $W = {W}_{1} {W}_{2} .$

The first stage of the precoding structure, i.e., *W₁,* may be described as a codebook for beam direction and is defined as wideband. The first stage consists of a group of 2-dimensional (2D) grid-of-beams (GoB), which may be characterized as ${W}_{1} = \left[\begin{matrix}{w}_{h} ⊗ {w}_{v} \\ 0\end{matrix} \begin{matrix}0 \\ {w}_{h} ⊗ {w}_{v}\end{matrix}\right]$ where *wₕ* and *wᵥ* are precoding vectors selected from an over-sampled discrete Fourier transform (DFT) for the horizontal direction and the vertical direction, respectively, and may be expressed by: ${w}_{v} = \frac{1}{\sqrt{M}} {\left[1,{e}^{\frac{j 2 πv}{{MO}_{1}}},…,{e}^{\frac{j 2 πmv}{{MO}_{1}}},…,{e}^{\frac{j 2 π \left(M-1\right) v}{{MO}_{1}}}\right]}^{T} ,$ ${w}_{h} = \frac{1}{\sqrt{N}} {\left[1,{e}^{\frac{j 2 πh}{{NO}_{2}}},…,{e}^{\frac{j 2 πnv}{{NO}_{2}}},…,{e}^{\frac{j 2 π \left(N-1\right) h}{{NO}_{2}}}\right]}^{T} ,$ where O₁ and O₂ are the over-sampling rate in the vertical and horizontal directions, respectively.

The second stage of the precoding matrix, i.e., W₂, is used for co-phasing between two polarizations. The co-phasing vector for a one-layer case may be defined as: ${W}_{2} \left(n\right) = \left[\begin{matrix}1 \\ {φ}_{n}\end{matrix}\right] , {φ}_{n} = {e}^{j \frac{πn}{2}} , n = 0 , 1 , 2 , 3$

The precoder matrix for one-layer transmission may be created by appending columns of one-layer precoder vectors defined as: $W \left(l, n\right) = {W}_{1} \left(l\right) {W}_{2} \left(n\right) = \left[\begin{matrix}{w}_{h} \left(l\right) \\ 0\end{matrix} \begin{matrix}0 \\ {w}_{h} \left(l\right)\end{matrix}\right] \left[\begin{matrix}1 \\ {φ}_{n}\end{matrix}\right] .$

The precoder matrix for multi-layer transmission may be created by appending columns of one-layer precoder vectors as:$W = \left[W\left({l}_{0}, {n}_{0}\right) W\left({l}_{1}, {n}_{1}\right) ⋯ W\left({l}_{L - 1}, {n}_{L - 1}\right)\right]$ where L is the number of layers.

As co-phasing vector will not change the phase difference between co-polarized antennas. The beam direction may be determined by *W*₁. The NR type I codebook assumes that the beams of two polarizations point to the same direction over the whole cell bandwidth. As timing errors of antennas will result in frequency dependent beam direction and misalignment of two beams, the antenna timing error has to be compensated to achieve desired system performance.

### Timing Error Measurement by CRI aided direct search

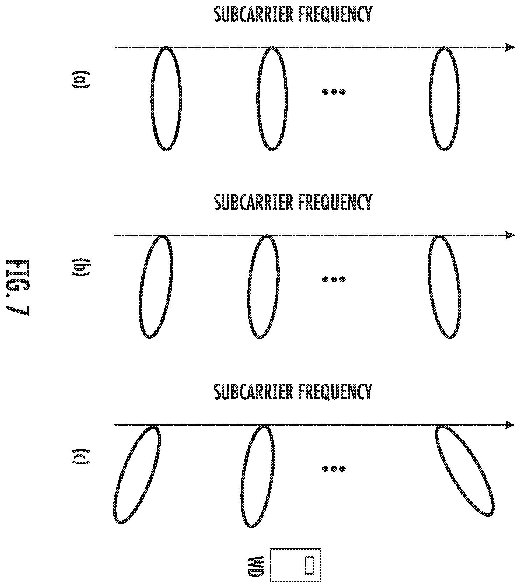

Returning again to the drawing figures, FIG. 7 illustrates the frequency dependent beam direction caused by zero, small and large timing errors.

As stated previously, the NR codebook of co-polarized antennas *W*₁ is designed as wideband. *W*₁ will compensate frequency dependent phase errors with a compromised value which results in spectrum efficiency loss: the larger the delay error the greater the loss.

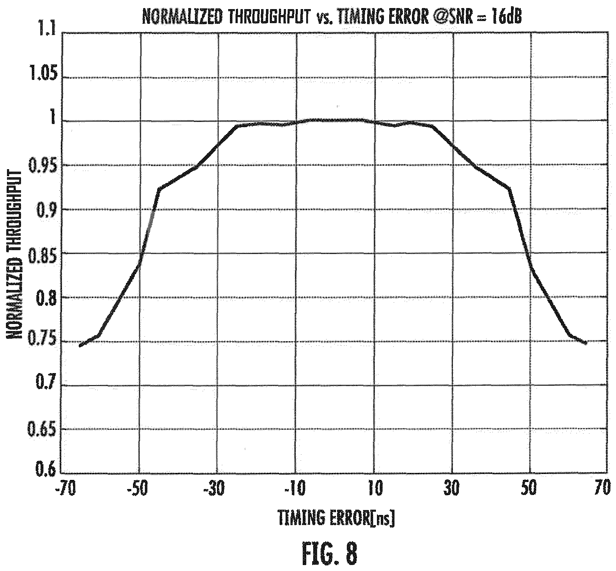

The spectrum efficiency can be seen as a function of timing error *f*(Δ*t_{X}*), *X* ∈ {*A, B*}. When the CSI report bandwidth and timing error are within a specific range such |2*πf*Δ*t_{X}*| *<* 2*π*, *f*(Δ*t_{X}*) is a unimodal function. The single maximum value of *f*(Δ*t_{X}*) occurs at Δ*tₓ* equals zero. FIG. 8 illustrates this relationship with normalized WD 22 throughput at a given signal-to-noise ratio (SNR) vs timing error.

It is observed that the timing error Δ*t_{X}* is quite stable over time in practical antenna systems. As *f*(Δ*t_{X}*) is unimodal with a single maximum value, when 2-port CSI-RS resources to two antennas of one polarization is mapped, e.g., polarization A, and a timing compensation *u* is injected into the CSI-RS signal, the spectrum efficiency will become *f*(Δ*t_{X}* - *u*)*.* If the timing compensation *u* is varied from minimum timing error *e*ₘᵢₙ to maximum timing error eₘₐₓ, and spectrum efficiency is measured, then *uₒₚₜ* = *-*Δ*t_{X},* which gives the maximum *f*(Δ*t_{X} - u*) = *f*(0).

Some embodiments of the antenna timing calibration for each polarization include methods performed separately and independently for each co-polarized antenna pair. However, antenna timing calibration for each polarization may be performed for dependent co-polarized antenna pairs.

### CSI-RS Resource Configuration and CSI Report Configuration

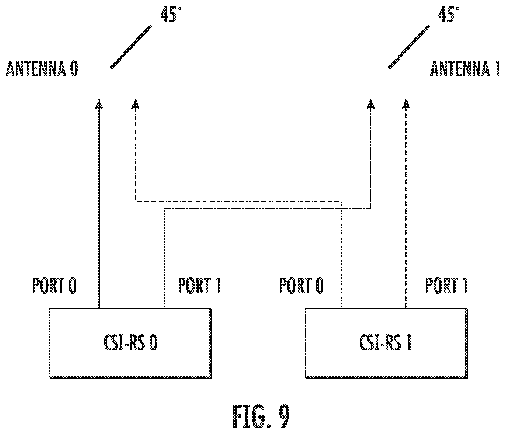

In one embodiment, a dedicated CSI-RS resource set with two 2-port non-zero power (NZP) CSI-RS resources is used for the search of timing errors for any given polarization. The two ports of both CSI-RS resources are mapped to two co-polarized antennas, e.g., antennas with polarization A, as shown in FIG. 9.

The CSI-RS signal is transmitted with periodicity *T*. For each transmission occurrence m, two different tentative timing compensations, e.g., *u*₀(*m*) and *u*₁(*m*), are injected to CSI-RS resource 0 and CSI-RS resource 1 respectively. The determination of *u*₀(*m*) and *u*₁(*m*) is described below.

### UE is configured to send a CSI report for each CSI-RS

In order to avoid the ambiguity of the CSI-report and the timing injected to CSI-RS signal, a one-to-one mapping between CSI report and CSI-RS transmission is required. In order to achieve this one-to-one mapping, the following additional configurations may be implemented:
1. In order to prevent the WD 22 from performing the averaging of the channel across multiple timing delayed CSI-RS signals, *timeRestrictionForChannel Measurements* is configured in *CSI-ReportConfig.* Based on 3GPP Technical Standard (TS38.214), if a WD 22 is configured with higher layer parameter *time RestrictionForChanne*/*Measurements* in *CSI-ReportConfig,* the WD 22 may derive the channel measurements for computing CSI reported in uplink slot *n* based only on the most recent occasion, and not later than the CSI reference resource, of NZP CSI-RS associated with the CSI resource setting without any averaging of past channel estimates.
2. To get the one-to-one mapped feedback, the CSI report may be synchronized with the CSI-RS resource transmission. As described in 1), if a WD 22 is configured with higher layer parameter *timeRestrictionForChanne*/*Measurements* in *CSI-ReportConfig,* the WD 22 may derive the channel measurements for computing CSI reported in uplink slot *n* based on only the most recent occasion, and (no later than the CSI reference resource), of NZP CSI-RS associated with the CSI resource setting. According to the CSI reference resource definition, in the time domain, the CSI reference resource for a CSI reporting in uplink slot *n is* defined by a single downlink slot *n-n_{CSI_ref}.* For periodic and semi-persistent CSI reporting, if a single CSI-RS resource is configured for channel measurement, *n_{CSI_ref}* the smallest value greater than or equal to 4 slots, such that it corresponds to a valid downlink slot. Based on this condition, for periodic and semi-persistent CSI reporting, the gap or CSI-RS signal transmission period *T* between the report and the CSI-RS transmission may be larger than 4, i.e., if *T* ≥ 4, each CSI report can be associated with a specific CSI-RS reference signal.

### Timing Error Measurement

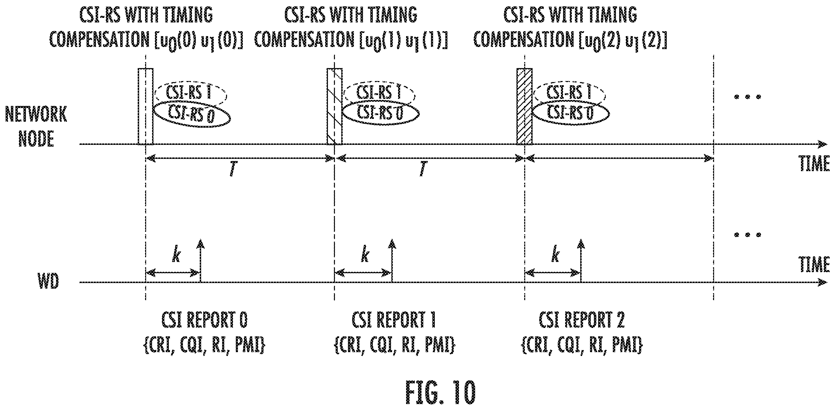

For each set of CSI-RS signal transmissions, a WD 22 should be able to perceive the spectrum efficiencies of the system with these two compensations, i.e., *f*(Δ*t_{X}* - *u*₀(*m*)) and *f*(Δ*t_{X}* - *u*₁(*m*)), and may notify the network node 16 with a CRI in the CSI report indicating the CSI-RS resource with higher spectrum efficiency. Based on the WD 22 reported CRI, the network node 16 understands which timing compensation as between *u*₀(*m*) and *u*₁(*m*) is better and may determine the next set of timing compensations that might further improve spectrum efficiency. See FIG. 10.

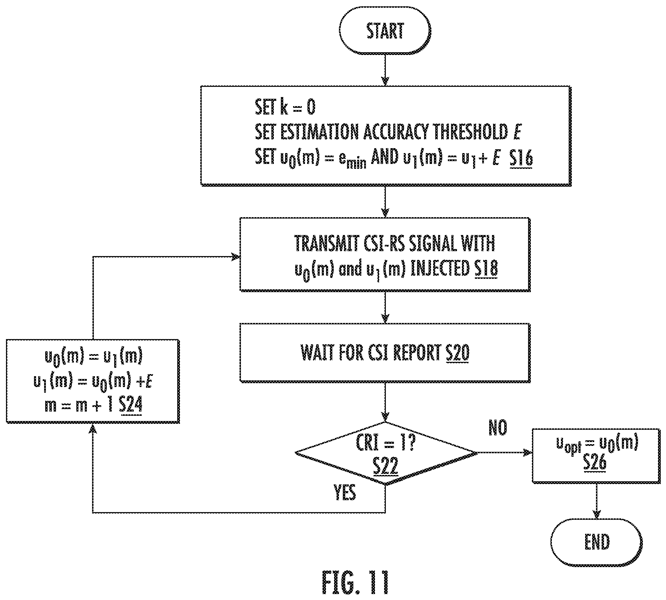

A simple search algorithm that can be performed by the processing circuitry 48 is the linear search as illustrated by flow chart in FIG. 11. First, values are initialized (Block S16). Then a CSI-RS is transmitted with *u*₀(*m*) and *u*₁(*m*) injected (Block S18). The network node 16 waits for a CSI report from the wireless device 22 (Block S20). When the CSI report is received, the network node 16, via processing circuitry 48, determines if the CRI reported in the CSI report is equal to 1 (Block S22). If so, the values of *u*₀(*m*) and *u*₁(*m*) are updated (Block S24) and the process continues at Block S18. Otherwise, *uₒₚₜ* = *u*₀(*m*) (Block S26), and the process ends.

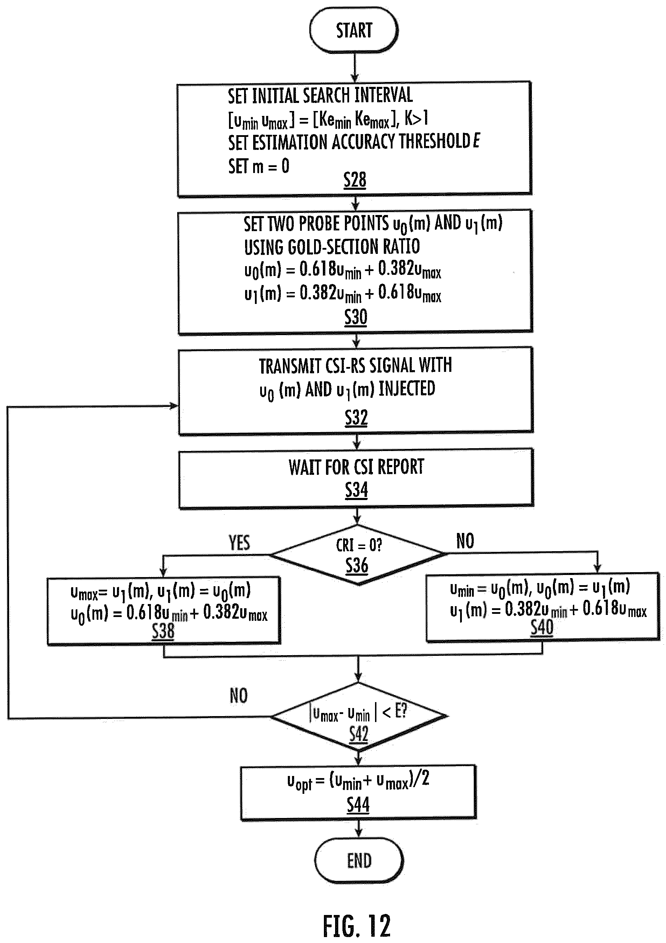

In some embodiments, a more computational efficient search method that can be performed by the processing circuitry 48 such as the Golden-Section Search method illustrated by the flow chart in FIG. 12 may also be used. The process begins by initializing a search interval and an estimation accuracy threshold *E(Block* S28). Then, two probe points *u*₀(*m*) and *u*₁(*m*) are set using a Golden-Section ratio (Block S30). Then a CSI-RS is transmitted with *u*₀(*m*) and *u*₁(*m*) injected (Block S32). The network node 16 waits for a CSI report from the wireless device 22 (Block S34). When the CSI report is received, the network node 16, via processing circuitry 48, determines if the CRI reported in the CSI report is equal to 0 (Block S36). If so, the values of *u*₀(*m*) and *u*₁(*m*) are updated (Block S38) according to a first weighted sum. Otherwise, *u*₀(*m*) and *u*₁(*m*) are updated (Block S40) according to a second weighted sum. Then, the processing circuitry 48 compares a difference between the minimum and maximum timing compensation values to a threshold (Block S42). If the difference is greater than the threshold, the process continues at Block S32, where another CSI-RS is sent with the updated value of *u*₀(*m*) and *u*₁(*m*). Otherwise, *uₒₚₜ* is set equal to the midpoint between the minimum and maximum timing compensation values (Block S44), and the process ends.

Other methods for one-dimensional maximum search problem can also be used to solve this problem.

### Timing Error Compensation

Once a timing error search process terminates, the measured timing error can be compensated in software and/or hardware of the network node 16. The timing error measurement and compensation can be performed periodically with a periodicity of *T_{AC}.*

The 1st timing error measured may be the whole timing error. After the 1st timing error compensation, the timing error measured may be the subsequent timing error search process residual error. Hence, the timing compensation is incremental, i.e., $u \left(-1\right) = 0 ,$ $u \left(n\right) = u \left(n-1\right) + {u}_{opt} \left(n\right) , for n \geq 0$

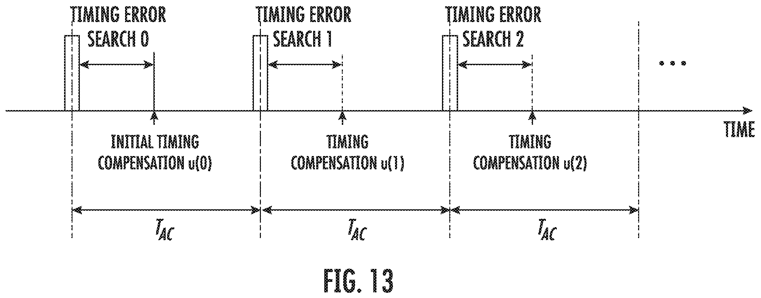

The timing error measurement and compensation process is illustrated in FIG. 13.

### Extension to large two-dimensional antenna array

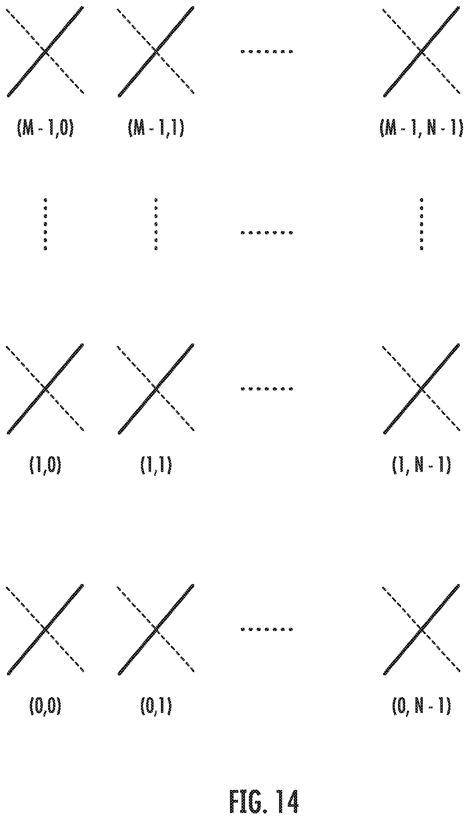

The method disclosed above may be applied to a two-dimensional antenna array. A typical massive MIMO system consists of two-dimensional antenna element array with *M* rows, *N* columns and *K* polarizations (*K*=2 in the case of cross-polarization) as shown in FIG. 14.

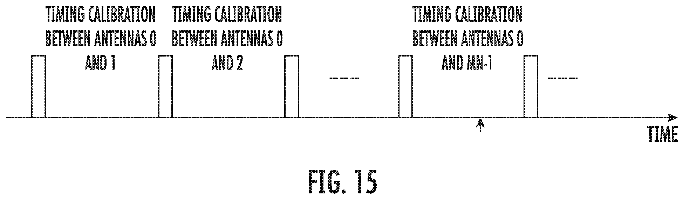

The number of antennas for each polarization is *MN.* The methods disclosed above may be executed iteratively to all antennas in the same polarization. One of the antennas in a polarization can be used as a reference, e.g., the antenna 0 for polarization A. The timing error between antennas 0 and 1 can be first calibrated, then the timing error between antennas 0 and 2 can be calibrated, and so on, until the timing calibration between antennas 0 and the last antenna in the first polarization MN-1 has been finished, as illustrated in FIG. 15.

Once the timing calibration of antennas in the first polarization is completed, the second polarization can then be calibrated. Similarly, the timing calibration of the second polarization can use one of the antennas in that polarization as a reference, e.g., the first antenna in that polarization, antenna *MN.* The timing error between antennas *MN* and *MN+1* can be calibrated, then the timing error between antennas *MN* and *MN+2*, can be calibrated, and so on.

According to one aspect, a method in a network node 16 for timing compensation of a co-polarized antenna pair is provided. The method includes transmitting a first Channel State Information Reference Signal, CSI-RS, having a first timing compensation and transmitting a second CSI-RS having a second timing compensation. The method also includes receiving a CSI-RS resource indicator, CRI, in a CSI report from a wireless device, WD 22. The method further includes determining from the CRI which of the first and second timing compensation results in a greater spectrum efficiency.

According to this aspect, in some embodiments, the method further includes iteratively performing the transmitting, receiving and determining until a timing compensation that results in a maximum spectrum efficiency at the WD 22 is determined. In some embodiments, the timing compensation that results in the maximum spectrum efficiency is determined according to a linear search algorithm. In some embodiments, the timing compensation that results in the maximum spectrum efficiency is determined according to a non-linear search algorithm. In some embodiments, the timing compensation that results in a maximum spectrum efficiency is determined periodically. In some embodiments, determining a timing compensation that results in a maximum spectrum efficiency is performed for a first polarization of a set of co-polarized antenna pairs, followed by determining a timing compensation that results in a maximum spectrum efficiency for a second polarization of the set of co-polarized antenna pairs. In some embodiments, for each polarization, one antenna is used as a reference antenna and a timing compensation is determined for each antenna of a polarization relative to the reference antenna. In some embodiments, the first and second timing compensation are incremental after a first iteration. In some embodiments, the method further includes transmitting an information element restricting a time for which the WD 22 makes a measurement of a channel between the network node 16 and the WD 22 to prevent the WD 22 from measuring the channel across multiple sequentially transmitted CSI-RS. In some embodiments, the method further includes configuring the WD 22 to make a channel measurement for reporting in an uplink timeslot based on a most recent occasion of a CSI-RS received by the WD 22.

According to another aspect, a network node 16 is configured for timing compensation of a co-polarized antenna pair. The network node 16 includes a radio interface 42 configured to: transmit a first Channel State Information Reference Signal, CSI-RS, having a first timing compensation and transmitting a second CSI-RS having a second timing compensation; and receive a CSI-RS resource indicator, CRI, in a CSI report from a wireless device, WD 22. The network node 16 also includes processing circuitry 48 in communication with the radio interface. The processing circuitry is configured to determine from the CRI which of the first and second timing compensation results in a greater spectrum efficiency.

According to this aspect, in some embodiments, the processing circuitry 48 and the radio interface 42 are configured to iteratively perform the transmitting, receiving and determining until a timing compensation that results in a maximum spectrum efficiency at the WD 22 is determined. In some embodiments, the timing compensation that results in the maximum spectrum efficiency is determined according to a linear search algorithm. In some embodiments, the timing compensation that results in the maximum spectrum efficiency is determined according to a non-linear search algorithm. In some embodiments, the timing compensation that results in a maximum spectrum efficiency is determined periodically. In some embodiments, the network node 16 further includes a set of co-polarized antenna pairs in communication with the radio interface 42, and wherein determining a timing compensation that results in a maximum spectrum efficiency is performed for a first polarization of the set of co-polarized antenna pairs, followed by determining a timing compensation that results in a maximum spectrum efficiency for a second polarization of the set of co-polarized antenna pairs. In some embodiments, one antenna is used as a reference antenna and a timing compensation is determined for each antenna of a polarization relative to the reference antenna. In some embodiments, the first and second timing compensation are incremental after a first iteration. In some embodiments, wherein the processing circuitry 48 and the radio interface 42 are configured to transmit an information element restricting a time for which the WD 22 makes a measurement of a channel between the network node 16 and the WD 22 to prevent the WD 22 from measuring the channel across multiple sequentially transmitted CSI-RS. In some embodiments, the network node 16 is further configured to configure the WD 22 to make a channel measurement for reporting in an uplink timeslot based on a most recent occasion of a CSI-RS received by the WD 22.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).
- 1x RTT: CDMA2000 1x Radio Transmission Technology
- 3GPP: 3rd Generation Partnership Project
- 5G: 5th Generation
- AAS: Active Antenna System
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- CSI-RS: Channel State Information Reference Signal
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- NZP-CSI-RS: Non-zero power CSI-RS
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDCP: Packet Data Convergence Protocol
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RI: Rank Indication
- RLC: Radio Link Control
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDAP: Service Data Adaptation Protocol
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WD: Wireless Device
- WLAN: Wide Local Area Network

## Claims

1. A method in a network node (16) for timing compensation of a co-polarized antenna pair (ANTENNA 0, ANTENNA 1), the method comprising:
transmitting (S10) a first Channel State Information Reference Signal, CSI-RS, (CSI-RS 0) having a first timing compensation (u₀(m)), wherein a first CSI-RS resource indicated by the first CSI-RS has two ports (PORT 0, PORT 1), and transmitting a second CSI-RS (CSI-RS 1) having a second timing compensation (u₁(m)), wherein a second CSI-RS resource indicated by the second CSI-RS has two ports (PORT 0, PORT 1) and wherein a first and a second of the two ports of each of the first and second CSI-RS resources is mapped to a first and a second antenna, respectively, of the co-polarized antenna pair.
receiving (S11) a CSI-RS resource indicator, CRI, in a CSI report from a wireless device, WD (22); and
determining (S12) from the CRI which of the first and second timing compensation results in a greater spectrum efficiency.

2. The method of Claim 1, further comprising iteratively performing (S22, S24, S42) the transmitting, receiving and determining until a timing compensation that results in a maximum spectrum efficiency at the WD (22) is determined (S22, S26, S44), wherein a set of first and second timing compensations for a respective next iteration is determined based on which one of the first and second timing compensation of a respective current iteration resulted in a greater spectrum efficiency.

3. The method of Claim 2, wherein:
- the timing compensation that results in the maximum spectrum efficiency is determined according to a linear search algorithm; or
- the timing compensation that results in the maximum spectrum efficiency is determined according to a non-linear search algorithm.

4. The method of Claim 2 or 3, wherein:
- the timing compensation that results in a maximum spectrum efficiency is determined periodically; and/or
- the first and second timing compensation are incremental after a first iteration.

5. The method of any of Claims 2 to 4, wherein determining a timing compensation that results in a maximum spectrum efficiency is performed for a first polarization of a set of co-polarized antenna pairs, followed by determining a timing compensation that results in a maximum spectrum efficiency for a second polarization of the set of co-polarized antenna pairs.

6. The method of Claim 5, wherein, for each polarization, one antenna is used as a reference antenna and a timing compensation is determined for each antenna of a polarization relative to the reference antenna.

7. The method of any of Claims 1 to 6, further comprising:
- transmitting an information element restricting a time for which the WD (22) makes a measurement of a channel between the network node (16) and the WD (22) to prevent the WD (22) from measuring the channel across multiple sequentially transmitted CSI-RS; and/or
- configuring the WD (22) to make a channel measurement for reporting in an uplink timeslot based on a most recent occasion of a CSI-RS received by the WD (22).

8. A computer-readable medium (52) comprising code portions which, when executed on a processor (50), configure the processor to perform the steps of a method according to any one of the preceding method claims.

9. A network node (16) configured for timing compensation of a co-polarized antenna pair, the network node (16) comprising:
a radio interface (42) configured to:
transmit a first Channel State Information Reference Signal, CSI-RS, (CSI-RS 0) having a first timing compensation (u₀(m)), wherein a first CSI-RS resource indicated by the first CSI-RS has two ports (PORT 0, PORT 1), and transmitting a second CSI-RS (CSI-RS 1) having a second timing compensation (u₁(m)), wherein a second CSI-RS resource indicated by the second CSI-RS has two ports (PORT 0, PORT 1) and wherein a first and a second of the two ports of each of the first and second CSI-RS resources is mapped to a first and a second antenna, respectively, of the co-polarized antenna pair; and
receive a CSI-RS resource indicator, CRI, in a CSI report from a wireless device, WD (22); and
processing circuitry (48) in communication with the radio interface, the processing circuitry configured to determine from the CRI which of the first and second timing compensation results in a greater spectrum efficiency.

10. The network node (16) of Claim 9, wherein the processing circuitry (48) and the radio interface (42) are configured to iteratively perform the transmitting, receiving and determining until a timing compensation that results in a maximum spectrum efficiency at the WD (22) is determined, wherein a set of first and second timing compensations for a respective next iteration is determined based on which one of the first and second timing compensation of a respective current iteration resulted in a greater spectrum efficiency.

11. The network node (16) of Claim 10, wherein:
- the timing compensation that results in the maximum spectrum efficiency is determined according to a linear search algorithm; or
- the timing compensation that results in the maximum spectrum efficiency is determined according to a non-linear search algorithm.

12. The network node (16) of Claim 10 or 11, wherein:
- the timing compensation that results in a maximum spectrum efficiency is determined periodically; and/or
- the first and second timing compensation are incremental after a first iteration.

13. The network node (16) of any of Claims 10 to 12, further comprising a set of co-polarized antenna pairs in communication with the radio interface, and wherein determining a timing compensation that results in a maximum spectrum efficiency is performed for a first polarization of the set of co-polarized antenna pairs, followed by determining a timing compensation that results in a maximum spectrum efficiency for a second polarization of the set of co-polarized antenna pairs.

14. The network node (16) of Claim 13, wherein, for each polarization, one antenna is used as a reference antenna and a timing compensation is determined for each antenna of a polarization relative to the reference antenna.

15. The network node (16) of any of Claims 9 to 14, wherein:
- the processing circuitry (48) and the radio interface (42) are configured to transmit an information element restricting a time for which the WD (22) makes a measurement of a channel between the network node (16) and the WD (22) to prevent the WD (22) from measuring the channel across multiple sequentially transmitted CSI-RS; and/or
- the processing circuitry (48) and the radio interface (42) are configured to configure the WD (22) to make a channel measurement for reporting in an uplink timeslot based on a most recent occasion of a CSI-RS received by the WD (22).

## Patentansprüche

1. Ein Verfahren in einem Netzwerkknoten (16) zur Timing-Kompensation eines co-polarisierten Antennenpaares (ANTENNE 0, ANTENNE 1), wobei das Verfahren Folgendes beinhaltet:
Übertragen (S10) eines ersten Kanalzustandsinformations-Referenzsignals, CSI-RS, (CSI-RS 0) mit einer ersten Timing-Kompensation (u₀(m)), wobei eine erste CSI-RS-Ressource, die durch das erste CSI-RS angezeigt wird, zwei Ports (PORT 0, PORT 1) aufweist, und
Übertragen eines zweiten CSI-RS (CSI-RS 1) mit einer zweiten Timing-Kompensation (u₁(m)), wobei eine zweite CSI-RS-Ressource, die durch das zweite CSI-RS angezeigt wird, zwei Ports (PORT 0, PORT 1) aufweist und wobei ein erster und ein zweiter der zwei Ports jeder der ersten und zweiten CSI-RS-Ressource auf eine erste bzw. eine zweite Antenne des co-polarisierten Antennenpaares abgebildet werden,
Empfangen (S11) eines CSI-RS-Ressourcenindikators, CRI, in einem CSI-Bericht von einer drahtlosen Vorrichtung, WD (22); und
Bestimmen (S12) aus dem CRI, welche der ersten und zweiten Timing-Kompensation zu einer größeren Spektrumseffizienz führt.

2. Verfahren gemäß Anspruch 1, das ferner das iterative Durchführen (S22, S24, S42) des Übertragens, Empfangens und Bestimmens beinhaltet, bis eine Timing-Kompensation, die zu einer maximalen Spektrumseffizienz an der WD (22) führt, bestimmt wird (S22, S26, S44), wobei ein Satz von ersten und zweiten Timing-Kompensationen für eine jeweilige nächste Iteration basierend darauf bestimmt wird, welche der ersten und zweiten Timing-Kompensation einer jeweiligen aktuellen Iteration zu einer größeren Spektrumseffizienz führte.

3. Verfahren gemäß Anspruch 2, wobei:
- die Timing-Kompensation, die zu der maximalen Spektrumseffizienz führt, gemäß einem linearen Suchalgorithmus bestimmt wird; oder
- die Timing-Kompensation, die zu der maximalen Spektrumseffizienz führt, gemäß einem nichtlinearen Suchalgorithmus bestimmt wird.

4. Verfahren gemäß Anspruch 2 oder 3, wobei:
- die Timing-Kompensation, die zu einer maximalen Spektrumseffizienz führt, periodisch bestimmt wird; und/oder
- die erste und zweite Timing-Kompensation nach einer ersten Iteration inkrementell sind.

5. Verfahren gemäß einem der Ansprüche 2 bis 4, wobei das Bestimmen einer Timing-Kompensation, die zu einer maximalen Spektrumseffizienz führt, für eine erste Polarisation eines Satzes von co-polarisierten Antennenpaaren durchgeführt wird, gefolgt von dem Bestimmen einer Timing-Kompensation, die zu einer maximalen Spektrumseffizienz für eine zweite Polarisation des Satzes von co-polarisierten Antennenpaaren führt.

6. Verfahren gemäß Anspruch 5, wobei für jede Polarisation eine Antenne als eine Referenzantenne verwendet wird und eine Timing-Kompensation für jede Antenne einer Polarisation relativ zu der Referenzantenne bestimmt wird.

7. Verfahren gemäß einem der Ansprüche 1 bis 6, das ferner Folgendes beinhaltet:
- Übertragen eines Informationselements, das eine Zeit beschränkt, für die die WD (22) eine Messung eines Kanals zwischen dem Netzwerkknoten (16) und der WD (22) vornimmt, um zu verhindern, dass die WD (22) den Kanal über mehrere aufeinanderfolgend übertragene CSI-RS misst; und/oder
- Konfigurieren der WD (22) zum Vornehmen einer Kanalmessung zum Berichten in einem Uplink-Zeitschlitz basierend auf einer jüngsten Gelegenheit eines CSI-RS, das durch die WD (22) empfangen wird.

8. Ein computerlesbares Medium (52), das Codeabschnitte beinhaltet, die, wenn sie auf einem Prozessor (50) ausgeführt werden, den Prozessor konfigurieren, um die Schritte eines Verfahrens gemäß einem der vorhergehenden Verfahrensansprüche durchzuführen.

9. Ein Netzwerkknoten (16), der zur Timing-Kompensation eines co-polarisierten Antennenpaares konfiguriert ist, wobei der Netzwerkknoten (16) Folgendes beinhaltet:
eine Funkschnittstelle (42), die für Folgendes konfiguriert ist:
Übertragen eines ersten Kanalzustandsinformations-Referenzsignals, CSI-RS, (CSI-RS 0) mit einer ersten Timing-Kompensation (u₀(m)), wobei eine erste CSI-RS-Ressource, die durch das erste CSI-RS angezeigt wird, zwei Ports (PORT 0, PORT 1) aufweist, und Übertragen eines zweiten CSI-RS (CSI-RS 1) mit einer zweiten Timing-Kompensation (u₁(m)), wobei eine zweite CSI-RS-Ressource, die durch das zweite CSI-RS angezeigt wird, zwei Ports (PORT 0, PORT 1) aufweist und wobei ein erster und ein zweiter der zwei Ports jeder der ersten und zweiten CSI-RS-Ressource auf eine erste bzw. eine zweite Antenne des co-polarisierten Antennenpaares abgebildet werden; und
Empfangen eines CSI-RS-Ressourcenindikators, CRI, in einem CSI-Bericht von einer drahtlosen Vorrichtung, WD (22); und
eine Verarbeitungsschaltung (48) in Kommunikation mit der Funkschnittstelle, wobei die Verarbeitungsschaltung konfiguriert ist, um aus dem CRI zu bestimmen, welche der ersten und zweiten Timing-Kompensation zu einer größeren Spektrumseffizienz führt.

10. Netzwerkknoten (16) gemäß Anspruch 9, wobei die Verarbeitungsschaltung (48) und die Funkschnittstelle (42) konfiguriert sind, um das Übertragen, Empfangen und Bestimmen iterativ durchzuführen, bis eine Timing-Kompensation, die zu einer maximalen Spektrumseffizienz an der WD (22) führt, bestimmt wird, wobei ein Satz von ersten und zweiten Timing-Kompensationen für eine jeweilige nächste Iteration basierend darauf bestimmt wird, welche der ersten und zweiten Timing-Kompensation einer jeweiligen aktuellen Iteration zu einer größeren Spektrumseffizienz führte.

11. Netzwerkknoten (16) gemäß Anspruch 10, wobei:
- die Timing-Kompensation, die zu der maximalen Spektrumseffizienz führt, gemäß einem linearen Suchalgorithmus bestimmt wird; oder
- die Timing-Kompensation, die zu der maximalen Spektrumseffizienz führt, gemäß einem nichtlinearen Suchalgorithmus bestimmt wird.

12. Netzwerkknoten (16) gemäß Anspruch 10 oder 11, wobei:
- die Timing-Kompensation, die zu einer maximalen Spektrumseffizienz führt, periodisch bestimmt wird; und/oder
- die erste und zweite Timing-Kompensation nach einer ersten Iteration inkrementell sind.

13. Netzwerkknoten (16) gemäß einem der Ansprüche 10 bis 12, der ferner einen Satz von co-polarisierten Antennenpaaren in Kommunikation mit der Funkschnittstelle beinhaltet, und wobei das Bestimmen einer Timing-Kompensation, die zu einer maximalen Spektrumseffizienz führt, für eine erste Polarisation des Satzes von co-polarisierten Antennenpaaren durchgeführt wird, gefolgt von dem Bestimmen einer Timing-Kompensation, die zu einer maximalen Spektrumseffizienz für eine zweite Polarisation des Satzes von co-polarisierten Antennenpaaren führt.

14. Netzwerkknoten (16) gemäß Anspruch 13, wobei für jede Polarisation eine Antenne als eine Referenzantenne verwendet wird und eine Timing-Kompensation für jede Antenne einer Polarisation relativ zu der Referenzantenne bestimmt wird.

15. Netzwerkknoten (16) gemäß einem der Ansprüche 9 bis 14, wobei:
- die Verarbeitungsschaltung (48) und die Funkschnittstelle (42) konfiguriert sind, um ein Informationselement zu übertragen, das eine Zeit beschränkt, für die die WD (22) eine Messung eines Kanals zwischen dem Netzwerkknoten (16) und der WD (22) vornimmt, um zu verhindern, dass die WD (22) den Kanal über mehrere aufeinanderfolgend übertragene CSI-RS misst; und/oder
- die Verarbeitungsschaltung (48) und die Funkschnittstelle (42) konfiguriert sind, um die WD (22) zum Vornehmen einer Kanalmessung zum Berichten in einem Uplink-Zeitschlitz basierend auf einer jüngsten Gelegenheit eines CSI-RS, das durch die WD (22) empfangen wird, zu konfigurieren.

## Revendications

1. Un procédé dans un nœud de réseau (16) pour une compensation temporelle d'une paire d'antennes co-polarisées (ANTENNE 0, ANTENNE 1), le procédé comprenant :
la transmission (S10) d'un premier signal de référence d'informations d'état de canal, CSI-RS, (CSI-RS 0) ayant une première compensation temporelle (u₀(m)), dans lequel une première ressource CSI-RS indiquée par le premier CSI-RS a deux ports (PORT 0, PORT 1), et
la transmission d'un deuxième CSI-RS (CSI-RS 1) ayant une deuxième compensation temporelle (u₁(m)), dans lequel une deuxième ressource CSI-RS indiquée par le deuxième CSI-RS a deux ports (PORT 0, PORT 1) et dans lequel un premier et un deuxième des deux ports de chacune des première et deuxième ressources CSI-RS sont mis en correspondance avec une première et une deuxième antenne, respectivement, de la paire d'antennes co-polarisées,
la réception (S11) d'un indicateur de ressource CSI-RS, CRI, dans un rapport CSI provenant d'un dispositif sans fil, WD (22) ; et
la détermination (S12) à partir du CRI de laquelle des première et deuxième compensations temporelles a pour résultat une efficacité spectrale supérieure.

2. Le procédé de la revendication 1, comprenant en outre la réalisation itérative (S22, S24, S42) de la transmission, de la réception et de la détermination jusqu'à ce qu'une compensation temporelle qui a pour résultat une efficacité spectrale maximale au niveau du WD (22) soit déterminée (S22, S26, S44), dans lequel un ensemble de première et deuxième compensations temporelles pour une itération suivante respective est déterminé sur la base de laquelle des première et deuxième compensations temporelles d'une itération courante respective a eu pour résultat une efficacité spectrale supérieure.

3. Le procédé de la revendication 2, dans lequel :
- la compensation temporelle qui a pour résultat l'efficacité spectrale maximale est déterminée selon un algorithme de recherche linéaire ; ou
- la compensation temporelle qui a pour résultat l'efficacité spectrale maximale est déterminée selon un algorithme de recherche non linéaire.

4. Le procédé de la revendication 2 ou de la revendication 3, dans lequel :
- la compensation temporelle qui a pour résultat une efficacité spectrale maximale est déterminée périodiquement ; et/ou
- la première et la deuxième compensation temporelle sont incrémentielles après une première itération.

5. Le procédé de n'importe lesquelles des revendications 2 à 4, dans lequel la détermination d'une compensation temporelle qui a pour résultat une efficacité spectrale maximale est réalisée pour une première polarisation d'un ensemble de paires d'antennes co-polarisées, suivie par la détermination d'une compensation temporelle qui a pour résultat une efficacité spectrale maximale pour une deuxième polarisation de l'ensemble de paires d'antennes co-polarisées.

6. Le procédé de la revendication 5, dans lequel, pour chaque polarisation, une antenne est utilisée en tant qu'antenne de référence et une compensation temporelle est déterminée pour chaque antenne d'une polarisation par rapport à l'antenne de référence.

7. Le procédé de n'importe lesquelles des revendications 1 à 6, comprenant en outre :
- la transmission d'un élément d'information restreignant un temps pendant lequel le WD (22) effectue une mesure d'un canal entre le nœud de réseau (16) et le WD (22) pour empêcher le WD (22) de mesurer le canal sur de multiples CSI-RS transmis séquentiellement ; et/ou
- la configuration du WD (22) pour effectuer une mesure de canal pour un rapport dans un intervalle de temps de liaison montante sur la base d'une occasion la plus récente d'un CSI-RS reçu par le WD (22).

8. Un support lisible par ordinateur (52) comprenant des portions de code qui, lorsqu'elles sont exécutées sur un processeur (50), configurent le processeur pour réaliser les étapes d'un procédé selon n'importe laquelle des revendications de procédé précédentes.

9. Un nœud de réseau (16) configuré pour une compensation temporelle d'une paire d'antennes co-polarisées, le nœud de réseau (16) comprenant :
une interface radio (42) configurée pour :
transmettre un premier signal de référence d'informations d'état de canal, CSI-RS, (CSI-RS 0) ayant une première compensation temporelle (u₀(m)), dans lequel une première ressource CSI-RS indiquée par le premier CSI-RS a deux ports (PORT 0, PORT 1), et la transmission d'un deuxième CSI-RS (CSI-RS 1) ayant une deuxième compensation temporelle (u₁(m)), dans lequel une deuxième ressource CSI-RS indiquée par le deuxième CSI-RS a deux ports (PORT 0, PORT 1) et dans lequel un premier et un deuxième des deux ports de chacune des première et deuxième ressources CSI-RS sont mis en correspondance avec une première et une deuxième antenne, respectivement, de la paire d'antennes co-polarisées ; et
recevoir un indicateur de ressource CSI-RS, CRI, dans un rapport CSI provenant d'un dispositif sans fil, WD (22) ; et
une circuiterie de traitement (48) en communication avec l'interface radio, la circuiterie de traitement étant configurée pour déterminer à partir du CRI laquelle des première et deuxième compensations temporelles a pour résultat une efficacité spectrale supérieure.

10. Le nœud de réseau (16) de la revendication 9, dans lequel la circuiterie de traitement (48) et l'interface radio (42) sont configurées pour réaliser itérativement la transmission, la réception et la détermination jusqu'à ce qu'une compensation temporelle qui a pour résultat une efficacité spectrale maximale au niveau du WD (22) soit déterminée, dans lequel un ensemble de première et deuxième compensations temporelles pour une itération suivante respective est déterminé sur la base de laquelle des première et deuxième compensations temporelles d'une itération courante respective a eu pour résultat une efficacité spectrale supérieure.

11. Le nœud de réseau (16) de la revendication 10, dans lequel :
- la compensation temporelle qui a pour résultat l'efficacité spectrale maximale est déterminée selon un algorithme de recherche linéaire ; ou
- la compensation temporelle qui a pour résultat l'efficacité spectrale maximale est déterminée selon un algorithme de recherche non linéaire.

12. Le nœud de réseau (16) de la revendication 10 ou de la revendication 11, dans lequel :
- la compensation temporelle qui a pour résultat une efficacité spectrale maximale est déterminée périodiquement ; et/ou
- la première et la deuxième compensation temporelle sont incrémentielles après une première itération.

13. Le nœud de réseau (16) de n'importe lesquelles des revendications 10 à 12, comprenant en outre un ensemble de paires d'antennes co-polarisées en communication avec l'interface radio, et dans lequel la détermination d'une compensation temporelle qui a pour résultat une efficacité spectrale maximale est réalisée pour une première polarisation de l'ensemble de paires d'antennes co-polarisées, suivie par la détermination d'une compensation temporelle qui a pour résultat une efficacité spectrale maximale pour une deuxième polarisation de l'ensemble de paires d'antennes co-polarisées.

14. Le nœud de réseau (16) de la revendication 13, dans lequel, pour chaque polarisation, une antenne est utilisée en tant qu'antenne de référence et une compensation temporelle est déterminée pour chaque antenne d'une polarisation par rapport à l'antenne de référence.

15. Le nœud de réseau (16) de n'importe lesquelles des revendications 9 à 14, dans lequel :
- la circuiterie de traitement (48) et l'interface radio (42) sont configurées pour transmettre un élément d'information restreignant un temps pendant lequel le WD (22) effectue une mesure d'un canal entre le nœud de réseau (16) et le WD (22) pour empêcher le WD (22) de mesurer le canal sur de multiples CSI-RS transmis séquentiellement ; et/ou
- la circuiterie de traitement (48) et l'interface radio (42) sont configurées pour configurer le WD (22) pour effectuer une mesure de canal pour un rapport dans un intervalle de temps de liaison montante sur la base d'une occasion la plus récente d'un CSI-RS reçu par le WD (22).
